Europäisches Patentamt

European Patent Office

Office européen des brevets

(11) Publication number: **0 526 680 A1**

## EUROPEAN PATENT APPLICATION

(21) Application number: **91610061.3**

(22) Date of filing: **06.08.91**

(51) Int. Cl.⁵: **B60T 7/20**, B60T 13/66, B60T 8/24, B64F 1/22

(43) Date of publication of application:
**10.02.93 Bulletin 93/06**

(84) Designated Contracting States:
**AT BE CH DE DK ES FR GB GR IT LI LU NL SE**

(71) Applicant: **BRUUN, Svend Aage Johan**
**23, Square Ambiorix, bte 43**
**B-1040 Bruxelles(BE)**

(72) Inventor: **BRUUN, Svend Aage Johan**
**23, Square Ambiorix, bte 43**
**B-1040 Bruxelles(BE)**

(74) Representative: **WITTRUP, Flemming et al**
**c/o Hofman-Bang & Boutard A/S Adelgade 15**
**DK-1304 Copenhagen K(DK)**

(54) **Vehicle with brake system for individual braking the wheels of the vehicle and method therefor.**

(57) A vehicle having a drawing unit (1) and one or more drawn units (2) drawn by the drawing unit (1), each unit (1, 2) comprising one or more brakable wheel pairs and being interconnected through respective pivotable couplings. The vehicle comprising sensing means for detecting a force related parameter acting between two units (1, 2) and for generating a signal representation in dependence thereof and passing it to a control unit. The control unit is adapted for controlling the braking of the wheels of a brakable wheel pair individually in dependence on the generated signal representation.

Figure 1a.

Figure 2.

The invention concerns a vehicle comprising several units being interconnected through pivotable couplings and each unit comprising wheel pairs having mutually brakable wheels.

Vehicles of this kind may be lorries with one or more trailers or a so-called truck with a trailer. Other possibilities include tractors with several carriages. It is a common feature of this type of vehicles and related vehicles that there is a drawing unit drawing the remaining units. The driver of the vehicle will normally drive it from the drawing unit. The individual units in vehicles of this kind are often very heavy as typically they are used for transporting goods. The individual units of such a vehicle thus possess large inertia and consequently a braking procedure for the vehicle must ensure that the front unit in the vehicle is not pushed during this procedure which could otherwise cause jackknifing of the vehicle units possibly resulting in accidents involving risk of damage to both persons and equipment, be it to the driver of the vehicle or to other road-users.

US patent specification No. 4 231 442 discloses how a truck composition can be descelerated in that the wheels on the rear unit of the vehicle are descelerated together, whereafter the wheels on a unit driving in front thereof are descelerated in dependence of a measured traction between the two units. This system will alleviate some of the above problems, but if the weather conditions are not optimum there will still be a risk that the rear unit skids thereby entailing accidents. The braking conditions unfortunately often deviate from the optimum as conditions are deteriorated if there is gravel by the roadside, the asphalt has boiled, the road surface is wet or slippery because of frosty weather etc. Asymmetric wear on brakes, wheels etc. can also make the braking proceed in an unexpected manner.

Consequently it is the object of the invention to devise a method of braking a vehicle comprising several units where the force acting between the individual units is used to stabilize the movements of the vehicle.

The object is achieved as stated in claim 1, and the invention further relates to a vehicle where the force between the individual units is measured and where the force measured is used for braking the wheels of a wheel pair individually. Hereby the stability between the drawing unit and one or more units drawn by the drawing unit is improved. This is not only expedient during a braking procedure, but the system disclosed is also usable when driving on sloping roads, e.g. when driving in mountains. Road safety will thereby be improved.

The detected force related parameter can be provided in any suitable way since it can be sensed directly by measuring the force which can be calculated by measuring the acceleration or it can be estimated on the basis of the measured parameters. The essential feature of this invention is not how the force is measured, but that the detected force is used for improving the road safety when braking, descenting mountains, and similar situations.

The vehicle according to the invention normally consists of a drawing unit and a drawn unit, but it will also be possible to use the invention in connection with several drawn units, in which case a passive unit without independent drawing power will then act as drawing unit for a following drawn unit.

According to the invention the traction force acting between two units is measured, this measurement being performed either directly, as a measurement of force, or indirectly, as a measurement of the acceleration of the units, it being possible on the basis of the known mass of at least one of the units to determine the force acting between the units. The force sensing means typically generates an analogous signal, the size of which is passed to a control unit. However, this signal can advantageously be sampled before transmission to the control unit, whereby a representation of the force acting between the units periodically is transmitted to the control unit. The transmitted signal values can here be used for automatic control or adjustment of the force between the units. Typically this can be done by comparing the signal values to a signal interval being delimited by an upper and a lower limit value representing the maximum traction force acceptable and the minimum traction force acceptable, respectively. If the sensed traction force falls outside this interval the control unit automatically adjusts the traction between the two units by influencing the brakes of the vehicle, and possibly regulating the engine power of the drawing unit. By this means the force acting between two units can be kept within a predetermined permissible interval.

In a preferred embodiment the vehicle according to the invention is equipped with contact means which can be activated by the control unit whereby this unit alone can take over the control of the brakes of the vehicle and the effect of the engine in situations where the force between the two units falls outside the said interval. This means that the driver cannot influence the engine effect and the braking power with accelerator or brake pedal, respectively, until a stable situation has been reestablished.

The control system of the vehicle can easily be built integral with a brake system of a kind known per se, and this brake system can advantageously comprise anti-blocking brakes (an ABS-brake system). The control system according to the invention may advantageously be adapted for also giving off an indication signal to the driver of the vehicle, whereby the driver of the vehicle can either be informed about the actual traction between the two units or merely be provided with an indication of the control unit having temporarily taken over the control of the engine effect and the brakes. It is obvious that the control system can also be adapted for controlling the size of the force between two units by adjusting the motor effect, de-clutching the motor, ect.

For carrying out the invention it was stated above that it is the traction force in the longitudinal direction of the vehicle which is detected, but the vehicle may advantageously be provided with means for also sensing the angle between the individual units, this information also being usable to control the traction force. This may be expedient when the vehicle turns a corner.

It is obvious that the permissible interval of the traction force depends on the speed at which the vehicle is travelling and the mass of the individual units. The control unit according to the invention may therefore advantageously be adapted for continuously calculating this interval, the mass of the units (at least the drawing units) then either being entered by means a keyboard or sensed by suitable sensors while information on the speed of the vehicle can be gathered from the speedometer of the vehicle.

If the truck-trailer combination is braked by the driver of the truck, the method can be characterized in that the signal from the brake pedal is directly used for braking the trailer. Braking the trailer will increase the traction force registered between truck and trailer. If this traction force surpassed a certain value, which value can be different for the different situations, e.g. using the brake pedal or the gas pedal by the driver, the traction effect or braking of the truck will be regulated to such a degree as to bring the traction under the value mentioned. Because the forces between trailer and truck can be held in the predetermined interval, instability between the truck and the trailer during movement is avoided.

According to the invention it is also possible that the braking signals are transmitted directly to the brake system of the truck and that the brake system of the trailer is activated when the draw between truck and trailer during a braking procedure will fall below a certain value. In this case it is necessary to take additional measures to make sure that the draw between truck and trailer can be held within the predetermined interval. One way to do this is that the automatic control can also influence the braking of the truck e.g. if the brakes of the trailer are working at their maximum and the draw force between truck and trailer is coming below the minimum permissible value, the braking force of the truck has to be lowered by the control.

The method can also be characterized by a fully automatic control of the brakes and possibly the traction. The automatic control will regulate the forces between truck and trailer while the brake pedal and possibly the gas pedal signals are inputs for the automatic control. This truck trailer combination can accelerate or decelerate by using the pedals. The automatic control system can easily be built through the application of commonly known automatic systems.

According to the invention the traction force decreases or may even become a pressure force if the truck is coming on the verge of a road, since this will act as a brake on the truck. In the case that the measured force drops under a certain value, this signal will regulate the traction effect or the braking of the combination to such a degree as to bring the traction within the predetermined interval, e.g. the brakes of the trailer will be activated which will cause an increase of the traction force. Doing this can prevent a crash such as jackknifing or rolling of the combination.

By a first alternative embodiment the force between the truck and the trailer is controlled since the method is characteristic in that a value being a function of the supplied power of the truck, i.e. the moment on the drive shafts or the fuel consumption, is also continuously sensed, that on the basis of the sensed values and the mass of the truck the force between truck and trailer is continuously calculated or at a certain rate, and that the power or braking of the truck is controlled in such a manner that the drawing force between truck and trailer is constantly kept within a predetermined, permissible interval.

By a second alternative embodiment of the invention the acceleration or deceleration in longitudinal direction of the truck is continuously sensed or at a certain rate or indirectly sensed and calculated, e.g. with the use of a velocitymeter, during a certain period after certain occasions and/or after a certain time interval, e.g. after a stilstand and/or after each x minutes. The values obtained are used for estimating the mass of the trailer. This estimation is used for adjusting the brakes of the truck-trailer combination in such a way that the force between the truck and the trailer will always lay within a certain interval during braking of the combination.

A preferred embodiment is characteristic in that a control unit which on the basis of the sensed or calculated values, i.e. the braking effect of the brakes and acceleration or deceleration, and the fixed values, i.e. the mass of the truck serves to calculate the mass of the trailer. This estimated mass of the trailer is used to adjust the brakes of the truck and the trailer, e.g. adjusting of the maximum pressure of each brake apart, in such a way that the force between truck and trailer will always lay in a certain pre-set interval during braking.

By a third alternative embodiment according to the invention the force between truck and trailer is continuously sensed. This alternative is characterized in that during driving continuously is sensed whether the traction forces transmitted between the trailer and the truck are below a certain value and possibly not above a certain value. The values, in fact two booleans, produced by the measuring are used for the automatic control or adjustment of the traction effect of the truck, the braking of the truck and/or the braking of the trailer - singly or by a combination of these factors, so that the drawing forces transmitted between the truck and the trailer are kept above a certain value and possibly below another value.

The third alternative also relates to a truck for carrying out the method and this truck is characterized by the incorporation into the coupling or nearby the coupling between the truck and the trailer of a switching element for giving signals if the draw force transmitted to the trailer will reach certain levels, i.e. if the draw force fall below a certain value.

A further improvement of this embodiment is characteristic in that the truck also incorporates into the coupling or nearby the coupling between the truck and the trailer, a switching element for giving a signal if the draw force transmitted to the trailer raises above a certain value and that the control unit also serves to control the power and the braking of the truck-trailer combination in such a manner that the drawing force transmitted to the trailer will never exceed a pre-set value.

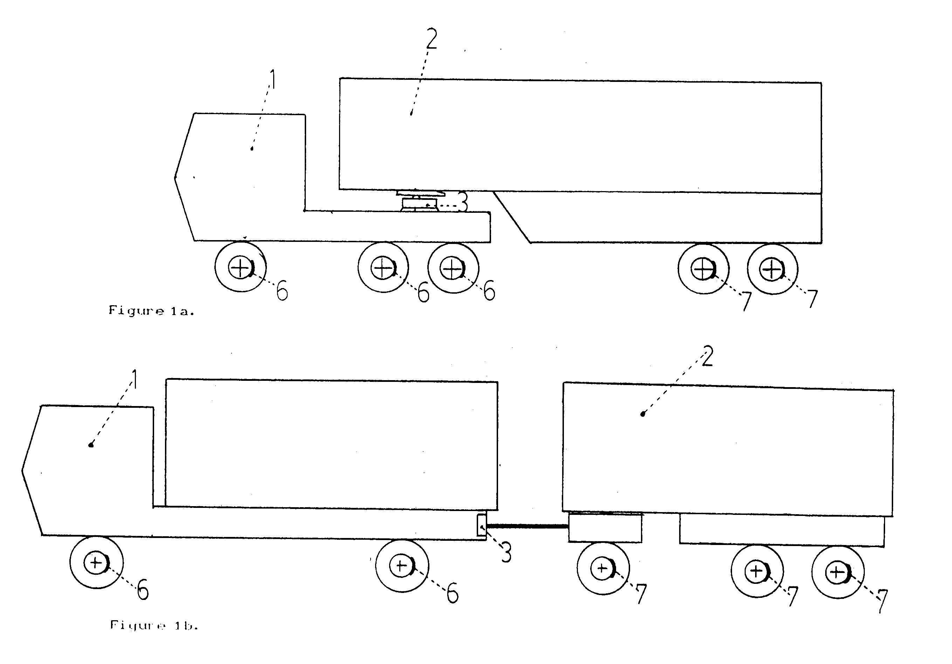

According to a fourth alternative embodiment of the invention the mass of the trailer is continuously or at a certain rate measured and in the case that the mass of the truck changes considerably (for instance in figure 1b) the mass of the truck is continuously or at a certain rate measured. The values obtained are used for controlling the traction effect and the braking effect of the truck-trailer combination or are used to adjust the braking effect of the brakes.

In the following the invention will be explained in connection with preferred embodiments, reference being made to the drawing in which:

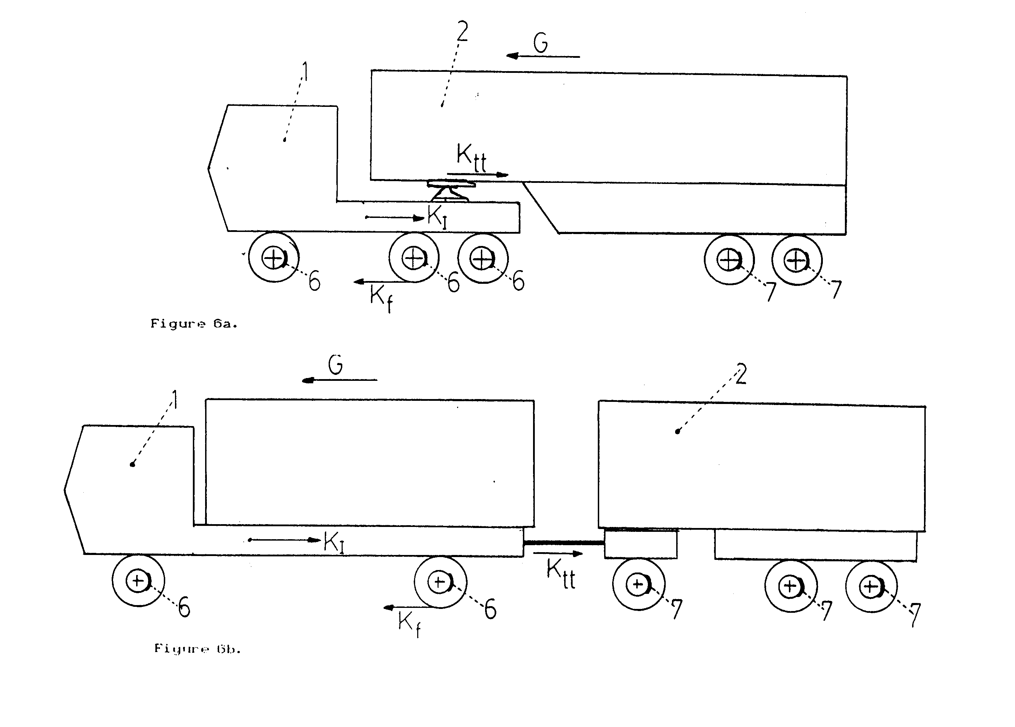

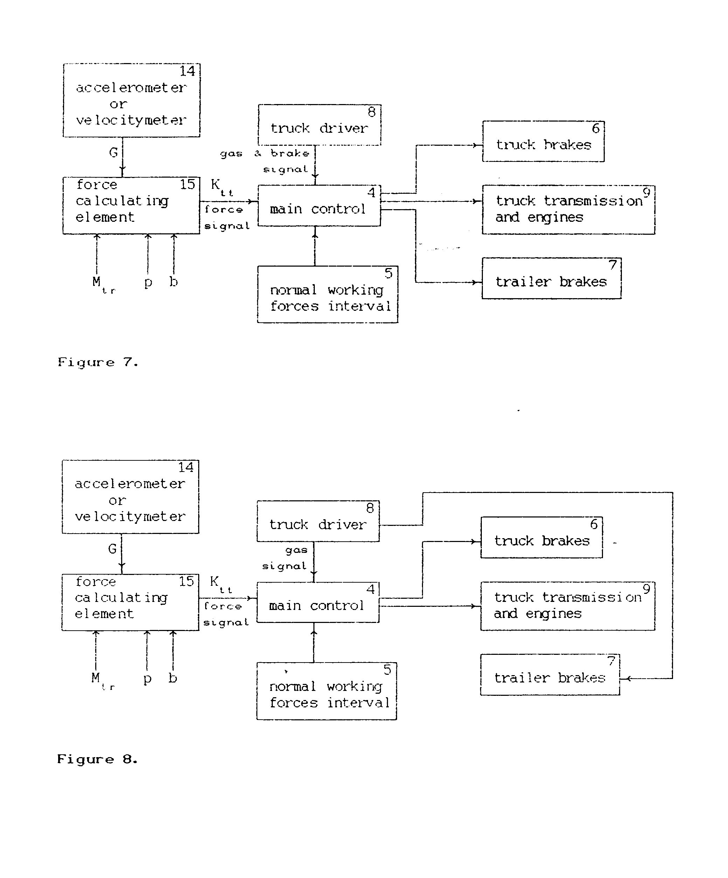

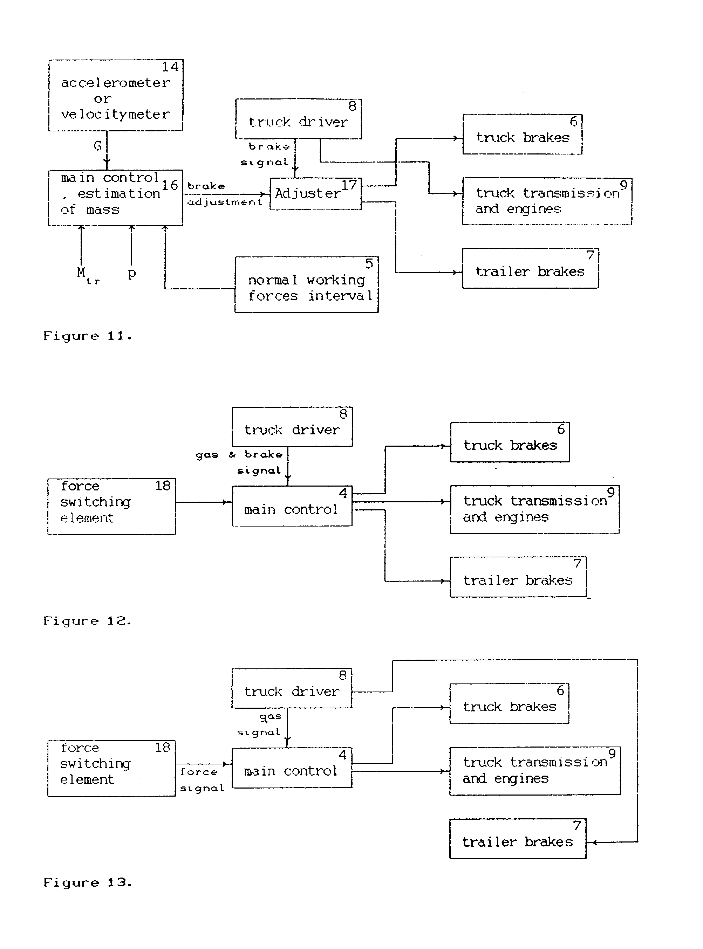

fig. 1a
is a side-view of a vehicle according to the invention, the vehicle being a lorry with trailer,
fig. 1b
is a side-view of another vehicle according to the invention, the vehicle here being a truck with a trailer,

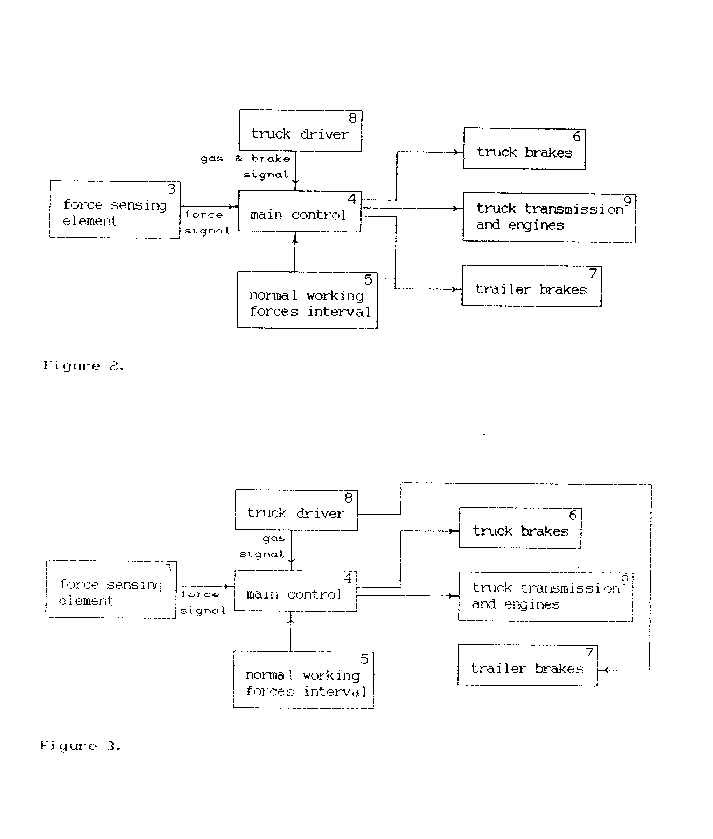

fig. 2 is a diagram of a preferred embodiment of a control system according to the invention,
fig. 3
is a diagram of a variation of the preferred embodiment of the control system according to the invention,
fig. 4
is a diagram of another variation of the preferred embodiment according to the invention,
fig. 5
is a diagram showing how the angle information is passed to the control system according to the invention,
fig. 6a and 6b
show vehicles corresponding to the vehicles shown in fig. 1a and 1b, with indication of the forces acting on the respective units,
fig. 7
shows a first alternative embodiment of the control system according to the invention for use in connection with the vehicles shown in fig. 6a and 6b,
fig. 8
shows a special case of the embodiment shown in fig. 7,
fig. 9
shows another special case of the embodiment shown in fig. 7,
fig. 10a and 10b
show vehicles corresponding to the vehicles shown in fig. 1a and 1b with indication of the forces acting on respective units,
fig. 11
illustrates a second alternative embodiment of the control system according to the invention,
fig. 12
shows a third alternative embodiment of a control system according to the invention,
fig. 13
shows a special case of the third alternative embodiment shown in fig. 12,
fig. 14
shows another special case of the control system shown in fig. 12,
fig. 15
shows an embodiment of a switching element for use in the embodiment shown in fig. 12, and
fig. 16
shows a fourth alternative embodiment of a control system according to the invention.

Referring to fig. 1 (a and b), a truck 1 is hitched to a trailer 2 via well known connection methods. There may futhermore be cable connections between the truck 1 and the trailer 2 for the delivery of control and power from the truck to the trailer. The truck and trailer may be of conventional construction.

A sensing element 3 of known construction is mounted in the connection of the truck between truck and trailer, e.g. between the trailer disc and the truck (fig. 1), or in the connection of the trailer or some other suitable position. This sensing element is able to perform a continuous measuring of the force transmitted between the truck 1 and the trailer 2. Such a sensing element may be hydraulic or may be electrical, for example of the widely used strain gauge type. The signals are continuously transmitted and are used for controlling purposes as explained later.

Fig. 2 shows the flow of signals according to the main control system. This control system includes the sensing element 3 in the connection between truck and trailer for the continuous measuring of the forces between truck and trailer. The values measured are continuously or at a certain rate transmitted on an automatic control unit 4 in which the measured values are compared to the desired values 5. If the desired values differ from the measured values, the control unit 4 will transmit control signals to means for adjusting the traction effect of the truck, such as the truck transmission and engines or the truck brakes 6, or the trailer brakes 7 so as to bring these values inside the normal working interval. This means for example that in the case the truckman uses the brake 8, the truck-trailer combination will be braked by the signals the control unit 4 is giving to the brakes of the truck 6 and the trailer 7, in proportion with the braking effect the truck driver is giving, while the control unit ensures the correct force between truck and trailer. The control unit 4 may be combined with the control unit for the so-called anti-lock systems for brakes. The control system 4 is able to control the brakes in groups or each brake separately. The exact layout used depends on demands, costs, preference, etc.

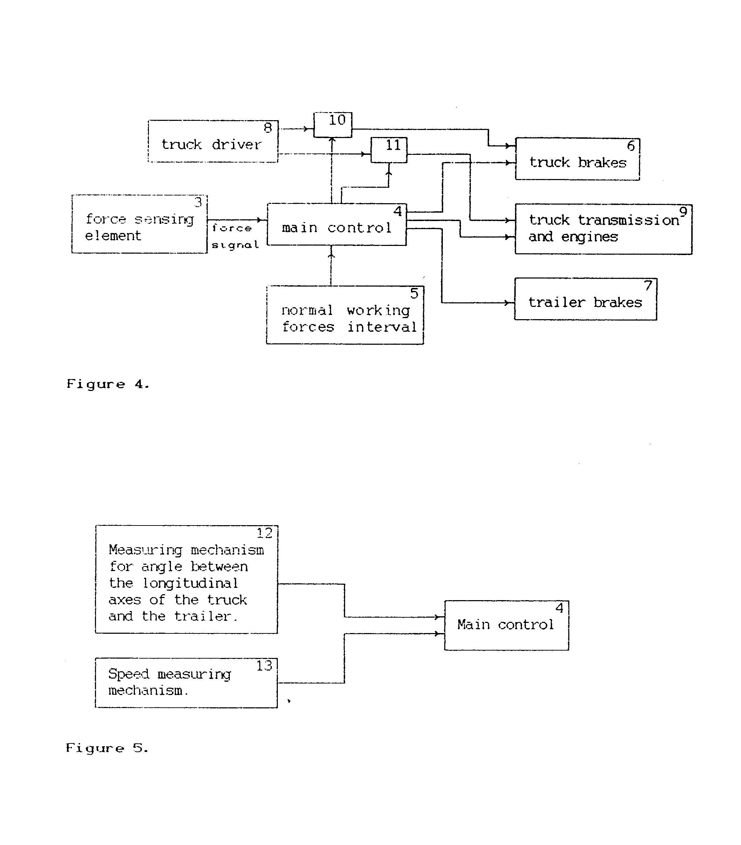

Fig. 3 and fig. 4 show variations of the embodiment shown in fig. 2. In figure 3 the braking signal/force of the driver is directly used to activate the brakes of the trailer (7). Thus braking will increase the traction force registered between the truck and the trailer. If the traction force surpasses a certain value the control unit 4 will become active for regulating the traction force within the allowed interval. In figure 4 the gas and braking signals/forces of the driver are directly transmitted to the truck transmission and engine 9 and to the truck brakes. If the force between truck and trailer 3 is not in agreement with the working force interval 5, the control unit 4 will become active for adjusting the traction effect of the truck, such as the truck transmission and engines or the truck brakes 6, or the trailer brakes 7 so as to bring theses values within the normal working interval.

The control unit 4 can throttle the gas (11) or the brake (10) signal of the driver if this is necessary for stability.

As mentioned before, the normal working force interval may be different for every working situation, e.g. if the truck driver uses the gas pedal the working force interval 5 may differ from the situation in which the truck driver uses the brakes.

It will now be explained how the methods according to the invention work under normal conditions.

During normal driving the gas pedal will be pushed down a certain extent, and the truck-trailer combination will have a certain velocity. The combination will be held on course with the steering wheel. The normal working force interval 5 may be dependent on the velocity. For instance the higher the speed the lower the maximum drawing force may be. This means that at high velocity the acceleration of the combination cannot be as high as at lower speeds. In general there are some main ways in which the situation can change.

In the first one, the truck-trailer combination is coming on the verge of the road. If the truck is coming on the verge of a road, the traction force will decrease substantially. This is measured by the force sensing element 3. This sudden decrease of the drawing force or the fact that the drawing force is falling below a certain minimum value will be detected by the main control 4, which will react accordingly. For example this reaction can be to brake the trailer, to get the force between trailer and truck back within the normal operating interval. Besides this, the driver can be signaled by way of the information unit, for instance to light a signal lamp indicating that the trailer brakes are working and a signal light to indicate that the truck is on the verge of the road. If the truck-trailer combination is equipped with an anti-blocking-system for the wheels, the velocity sensors, which can be installed at a few or at all wheels, can also be used to detect whether the truck-trailer combination is on the verge of the road by means of a sudden velocity change of one or some of the wheels. Also with these velocity sensors it may be possible to detect which wheels and/or which side of the combination is on the verge of the road. This information can be used by the main control 4 to activate also the brakes 6 on the side of the truck which is not on the verge of the road.

The same kind of procedure can be used in the case the trailer is coming on the verge of the road. The reaction of the main control 4 is then of course different. For example only a light is activated on the information unit to signal the driver that the trailer is on the verge of the road.

In the second one, the driver releases the gas pedal, eventually disconnects the engine from the wheels and presses the braking pedal. In one embodiment illustrated in figure 2, the brake and gas pedal are directly connected to the main control unit 4. The main control will now activate the brakes according to the signal level of the braking pedal and according to the programmed strategy. Also signals may be sent to the information unit to inform the driver about the braking force exerted by each brake. As indicated before, so-called antilocking systems can be incorporated.

In another embodiment illustrated in figure 3, which is in fact a special case of the embodiment shown in figure 2, pressing the braking pedal will activate the brakes of the trailer 7. Eventually by releasing the gas pedal or by pressing the brake pedal, the main control 4 will choose a different working force interval 5. If the drawing force between the truck and the trailer, measured by the force sensing element 3, exceeds a certain upper limit, the main control will start a braking procedure so as to bring the drawing force back within the working force interval 5; e.g. the truck brakes are activated to a certain degree. In this special embodiment the driver has to press the braking pedal if he gets the signal or if he knows that the truck is on the verge of the road. Another possibility is that in emergency situations, such as coming on the verge of the road, the control unit 4 can also activate the brakes of the trailer 7.

In the last embodiment to be mentioned, illustrated in figure 4, which is also a special case of the embodiment shown in figure 2, pressing the braking pedal will activate the brakes of the truck 6. Also in this case the main control 4 can choose the working force interval depending on the actual conditions. In this case, activating the brakes of the truck 6, will cause the force between truck and trailer to sink below a lower limit, which may be a traction or a pressure force. This will cause the main control 4 to start a procedure, for example activating the trailer brakes and releasing the truck brakes to a certain level, to bring the force between truck and trailer back within the working force interval 5.

In the third way in which the situation changes, the last one to be mentioned, the truck-trailer combination is going down a slope. Going down a slope can create a situation in which the trailer tends to push the truck. This will be registered by the force sensor 3. The main control 4 is able to react in a proper way. For instance according to the embodiments of figure 2 and 4 the brakes of the trailer can be activated and the driver can be signaled. If according to the embodiment of figure 3 the main control cannot activate the brakes of the trailer, the driver can be signaled. In this case the driver has to activate the brakes of the trailer.

Generally, the method according to the invention by which braking is established by means of the trailer and the truck brakes is a safe system, because it gives no risk of jackknifing of the combination as would be possible with the classic brake systems. For preventing jackknifing, it is therefore preferred to set the lower limit of the mentioned interval of permissible forces between the truck and the trailer above zero or at least not too negative, i.e. to ensure that there will always exist a positive drawing force or at least a not too negative pushing force between truck and trailer. Thereby great stability is achieved and ensured.

As mentioned before the truck may also be fitted with a device 12 (see figure 5) for measuring of the angle between the longitudinal axis of the truck and the trailer in the horizontal plane. At a low speed, this angle can be great without any danger, but at greater speeds the permissible interval of this angle decreases. Therefore, also the result of measuring the speed 13 is transmitted to the main control 4. If the combination of actual speed and angle is found to be dangerous, an emergency procedure has to be started. For example, if no other abnormal signals, such as a measured force between truck and trailer which is not within the permissible interval, are received, the main control 4 can activate the brakes 7 of the trailer. Also the measured angle 12 and speed 13 can be used to change the control slightly for instance during braking.

Figure 6 illustrates a first alternative embodiment for the system according the invention. The figure shows the forces by which the truck 1 is influenced when the truck accelerates forward with an acceleration G considered positive in the shown direction. Under these circumstances the truck will firstly in its center of gravity be influenced by an inertia force equal to the mass of the truck multiplied by its acceleration:

$$K_l = M_{tr}.G$$

The case is contemplated where it is the engine of the truck which gives rise to the mentioned acceleration and this will then imply that the truck is influenced by a forwardly directed friction force from the underlying base: $K_f$. In the connection between the truck and the trailer there will under these circumstances exist a rearwardly directed force $K_{tt}$. This quantity is so far unknown.

The forces influencing the truck will at any time be in equilibrium and therefore the following equation will apply:

$$K_l + K_{tt} = K_f$$

However, as mentioned above $K_l = M_{tr}.G$ and $K_f = f(p) + g(b)$ where p is the engine power and b is the braking power; e.g. $K_f$ can be calculated from the braking pressure and the moment on the drive shaft. It is thus evident that the unknown quantity:

$$K_{tt} = (f(p) + g(b)) - M_{tr}.G$$

The correlation between $K_f$ and a function f(p), which gives the driving force as a function of for instance the motor power or the moments on the drive shafts, and a function g(b), which gives the braking force as a function of for instance the braking pressure, can easily be found by tests or can even be calculated. The mass of the truck in figure 6a is constant, i.e. if G is directly sensed or indirectly sensed, it is possible at any time to calculate $K_{tt}$ which is in fact the interesting quantity which has to be controlled. In case of the truck of figure 6b the load of the truck has to be measured in order to know the total mass of the truck. This can be done for example by measuring the distance the springs are impressed (with steel springs) or the bellows pressure (with air springs). This principle is also used for the well known automatic load dependent brake force distribution. Now the mass of the truck is known and G is directly sensed or indirectly sensed, $K_{tt}$ can also be calculated.

Also, if desired, other effects could be taken into account, such as for example an estimation of the air-friction.

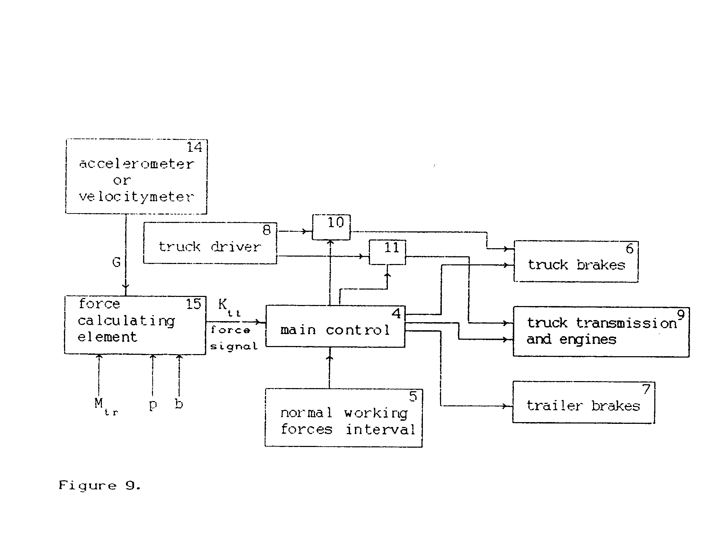

All things considered it is of course possible at any time on the basis of the engine power of the truck, the braking of the truck and the sensed acceleration of the truck to calculate $K_{tt}$. On the basis of a continuous calculation of this quantity it is thus possible also to control this quantity by regulating the power supplied by the truck and/or the braking. This may for example be done as shown in the flow chart in figure 7. Figure 8 and 9 show some alternative embodiments of the flow chart of figure 7.

The sensed acceleration G, or calculated G out of the velocity changes, a quantity from which the driving force can be calculated, such as the supplied power p or the moment M being the sum of moments on the drive shafts and the pressure in the braking system, and the mass $M_{tr}$ of the truck are sent or known to the force calculation unit 15. This force calculation unit 15 then continuously calculates $K_{tt}$ on the basis of the formula:

$$K_{tt} = (f(p) + g(b)) - M_{tr}.G$$

The value $K_{tt}$ is then passed to the control unit 4. Everything else is working according to the mentioned situation in which the force $K_{tt}$ between truck and trailer is directly measured. The normal braking procedures are the same as in the case when the force is measured directly. But in this case only in the situation that the main control 4 knows whether the brakes are used or not, the main control unit 4 can make a distinction between normal braking and coming on the verge of a road. This is already the case in figure 7 and can easily be made the case in figure 8 and 9; for example the force calculating element 15 is one part with the main control unit 4 or is sending this information to the main control unit 4. However, no distinction can be made as to whether the truck or the trailer is coming on the verge of the road, because coming on the verge of a road is detected by a large negative G value while the brakes are not used. (A low negative G value will also appear by releasing the gas pedal, so for security reasons this may be checked as well.) If the situation is signaled that the truck-trailer combination is coming on the verge of the road the same emergency procedure can be started as mentioned in the case that the force between truck and trailer is measured directly and the truck is coming on the verge of the road. Going down a hill will give no problems and can be handled the same way as in the case the force between truck and trailer is measured directly. However, the calculated force $K_{tt}$ is lower than the real force between truck and trailer because the real force is:

$$K_{real} = (f(p) + g(b)) - M_{tr}.G + K_{slope} = K_{tt} + K_{slope}$$

$K_{slope}$ is the force that draws the truck downward and thus is positive going down a slope.

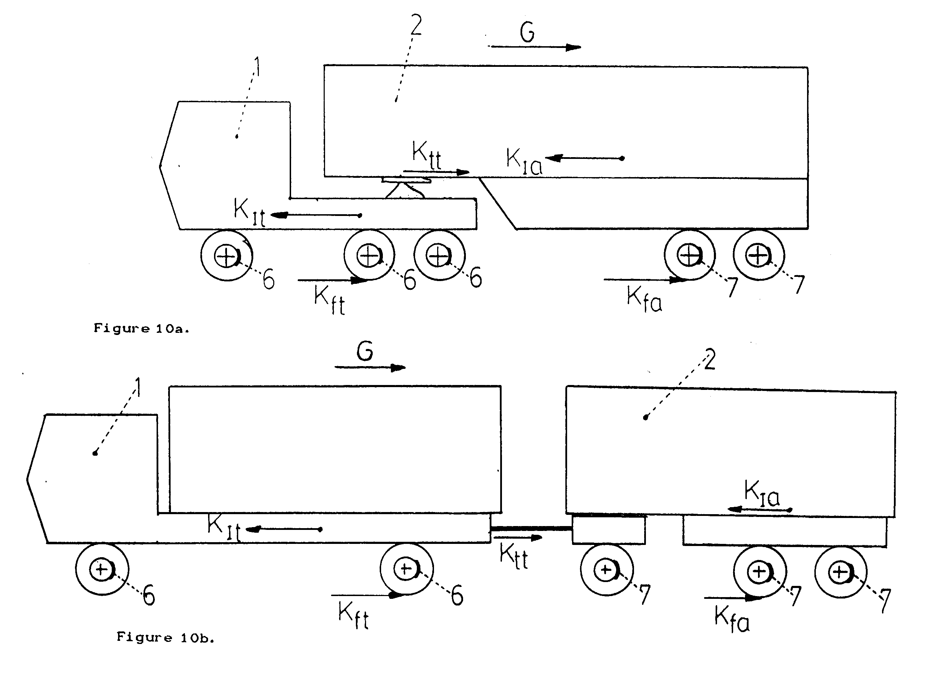

Figure 10 shows the forces by which the truck 1 and the trailer 2 are influenced when the truck decelerates with an acceleration G considered positive in the shown direction. Under these circumstances the truck will firstly in its center of gravity be influenced by an inertia force equal to the mass of the truck multiplied by its acceleration:

$$K_{lt} = M_{tr}.G$$

Also under these circumstances the trailer will firstly in its center of gravity be influenced by an inertia force equal to the mass of the trailer multiplied by its acceleration:

$$K_{la} = M_{ta}.G$$

The case is contemplated where it is the brakes of the truck-trailer combination which give rise to the mentioned acceleration and this will then imply that the truck is influenced by a backwardly directed friction force from the underlying base: $K_{ft}$. The trailer is influenced by a backwardly directed friction force from the underlying base: $K_{fa}$. In the connection between the truck and the trailer there will under these circumstances exist a rearwardly

directed force $K_{tt}$. $K_{tt}$, as shown in figure 10, is the force exerted by the trailer on the truck. This quantity is so far unknown.

The forces influencing the truck and the trailer will at any time be in equilibrium and therefore the following equation will apply:

$$K_{lt} + K_{lt} = K_{ft} + K_{fa}$$

However, as mentioned above $K_{lt} = M_{tr}.G$, $K_{la} = M_{ta}.G$, $K_{ft} = f(p)$ and $K_{fa} = g(p)$ where p is for example the pressure in the braking system. It is thus evident that the unknown quantity:

$$M_{ta} = (f(p) + g(b) - M_{tr}.G)/G$$

The correlation between $K_{ft}$ and a function $f(p)$, which gives the braking force of the truck as a function of for instance the braking pressure and the correlation between $K_{fa}$ and a function $g(b)$, which gives the braking force of the trailer as a function of for instance the braking pressure, can easily be found by tests or can even be calculated. The mass of the truck in figure 10a is constant, i.e. if G is directly sensed or indirectly sensed, it is possible at any time to calculate $M_{ta}$ which is in fact the interesting quantity which has to be known. In case of the truck of figure 10b the load of the truck has to be measured in order to know the total mass of the truck. This can be done for example by measuring the distance the springs are impressed (with steel springs) or the bellows pressure (with air springs). This is also used for the well known automatic load dependent brake force distribution. Now the mass of the truck is known and G is directly sensed or indirectly sensed, $M_{ta}$ can also be calculated.

Instead of the mentioned scheme to calculate $M_{ta}$, the scheme of the first alternative method can be used. While not using the brakes, $K_{tt}$ can be calculated with the scheme of the first alternative method. Because G is known, $M_{ta}$ can be calculated:

$$M_{ta} = K_{tt}/G$$

Also, if desired, other effects could be taken into account, such as for example an estimation of the air-friction.

All things considered it is of course possible on the basis of an estimation of the mass of the trailer $M_{ta}$ and the mass of the truck $M_{tr}$ to adjust the braking effect of each brake, for example by adjusting the pressure ratio between the brakes, in such a way that during braking the force between truck and trailer will lay within a predetermined interval. This may for example be done as shown in the flow chart in figure 11.

The sensed acceleration G or calculated G out of the velocity changes, a quantity from which the driving force can be calculated, such as the supplied power p or the moment M being the sum of moments on the drive shafts and the pressure in the braking system, and the mass $M_{tr}$ of the truck are sent or known to the mass calculation unit 16. This mass calculation unit 16 then estimates at certain occasions $M_{ta}$ on the basis of for example the formula:

$$M_{ta} = (f(p) + g(b) - M_{tr}.G)/G$$

With the use of this value the brake adjusting system 17 is controlled. Furthermore the braking system is working like conventional systems. Thus, also anti-blocking systems can be incorporated.

Of course it is now impossible to make a distinction between normal braking and coming on the verge of a road. However, for detecting the situation for coming on the verge of the road, the method of the first alternative may be incorporated.

A third alternative embodiment will be descibed in the following. Referring to fig. 1a and 1b, a truck 1 is hitched to a trailer 2 via well known connection methods. There may furthermore be cable connections between the truck 1 and the trailer 2 for the delivery of control and power from the truck to the trailer. The truck and the trailer may be of conventional construction.

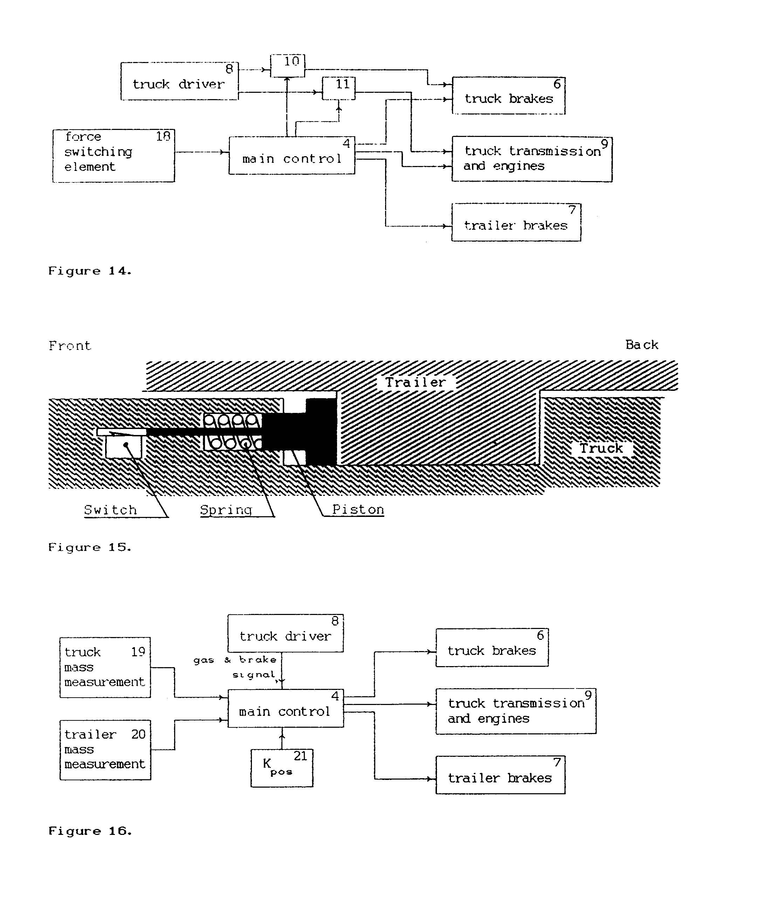

A sensing element 3 in figure 1a and 1b is replaced by a force switching element 18 (fig. 12, 13, 14 and 15) and is mounted in the connection of the truck between truck and trailer, e.g. between the trailer disc and the truck, or in the connection of the trailer or some other suitable position. For example, this force switching element is able to give a signal if the force transmitted between the truck 1 and the trailer 2 is falling below a certain value. Such a switching element may be hydraulic, mechanical or may be electrical, for example according to figure 15. A pressure force will impress the spring. If the pressure force is high enough, the piston will activate the switch. The switching signal, on or off, is continuously transmitted and is used for controlling purposes as explained later. A preferred extension of the force switching element is characterised in that a signal is also given if the drawing force exceeds a certain value. Such a switching element may be hydraulic, mechanical or may be electrical, for example fig. 15 has to be extended with an identical mechanism on the back side of the connection.

Fig. 12 shows the flow of signals according to the main control system. This control system includes the switching element 15 in the connection between truck and trailer. The values measured are continuously or at a certain rate transmitted on an automatic control unit 4 in which the measured boolean values are used for control. The control unit 4 will transmit control signals to means 9 for adjusting the traction effect of the truck, the truck brakes 6 or the trailer brakes 7. This means for example that in the case the truckman uses the brake 8, the truck-trailer combination will be braked by the signals the control unit 4 is giving to the brakes of the truck 6 and the trailer 7, in proportion with the braking effect the truck driver is giving, while the control unit ensures the correct force between truck and trailer. The control unit 4 may be combined with the control unit for the so-called anti-lock systems for brakes. The control system 4 is able to control the brakes in groups or each brake separately. The exact layout used depends on demands, costs, preference, etc.

Alternative embodiments of figure 12 are shown in figure 13 and figure 14. In figure 13 the braking signal/force of the driver is directly used to activate the brakes of the trailer (7). Thus braking will increase the traction force between the truck and the trailer. If this traction force surpasses a certain value the switch 15 will alter its value and the control unit 4 will become active for regulating the traction force within the allowed interval. In figure 14 the gas and braking signals/forces of the driver are directly transmitted to the truck transmission and engine 9 and to the truck brakes. If the force between truck and trailer falls below a certain value the switch 15 is altered and the control unit 4 will become active for adjusting the traction effect of the truck, such as the truck transmission and engines or the truck brakes 6 or the trailer brakes 7 so as to bring these values within the normal working interval. The control unit 4 can throttle the gas (11) or the brake (10) signal of the driver if this is necessary for stability.

The switching element 15 may have more than one switch, for more than one force level, so that the control unit 4 can use different switches for different working conditions, e.g. if the truck driver uses the gas pedal the switch used may be different from the situation in which the truck driver uses the brakes.

The methods of the third alternative work under normal conditions according to the methods used in the case that the force between truck and trailer is measured continuously.

A fourth alternative embodiment is shown in fig. 6 and will be explained in the following.

Figure 10 shows, according to figure 1, a truck connected to a trailer. The figure shows the forces by which the truck 1 and the trailer 2 are influenced when the truck decelerates with an acceleration G considered positive in the shown direction. Under these circumstances the truck will firstly in its center of gravity be influenced by an inertia force equal to the mass of the truck multiplied by its acceleration:

$$K_{lt} = M_{tr}.G$$

Also under these circumstances the trailer will firstly in its center of gravity be influenced by an inertia force equal to the mass of the trailer multiplied by its acceleration:

$$K_{la} = M_{ta}.G$$

The case is contemplated where it is the brakes of the truck-trailer combination which give rise to the mentioned acceleration, and this will then imply that the truck is influenced by a backwardly directed friction force from the underlying base: $K_{ft}$. The trailer is influenced by a backwardly directed friction force from the underlying base: $K_{fa}$. In the connection between the truck and the trailer there will under these circumstances exist a rearwardly directed force $K_{tt}$. $K_{tt}$ in the figure is the force exerted by the trailer on the truck. This quantity is so far unknown.

The forces influencing the truck and the trailer will at any time be in equilibrium and therefore the following equation will apply:

$$K_{lt} + K_{lt} = K_{ft} + K_{fa}$$

However, as mentioned above $K_{lt} = M_{tr}.G$, $K_{la} = M_{ta}.G$, $K_{ft} = f(p)$ and $K_{fa} = g(p)$ where p is for example the pressure in the braking system.

The correlation between $K_{ft}$ and a function $f(p)$, which gives the braking force of the truck as a function of for instance the braking pressure and the correlation between $K_{fa}$ and a function $g(p)$, which gives the braking force of the trailer as a function of for instance the braking pressure, can easily be found by tests or can even be calculated.

The force between truck and trailer is equal to:

$$K_{tt} = K_{fa} - K_{la} = g(p) - M_{ta}.G$$

The brakes can be controlled or installed, for example, in such a way that the braking effect is linear proportional to the braking force exerted by the driver, thus:

$$g(p) = A.f, \quad f(p) = R.f$$

Here f is the braking force exerted by the driver, and A and R are constants which can be changed by the control unit or can be adjusted. During braking a certain positive $K_{tt}$ is wished, say $K_{tt} = K_{pos}$. Furthermore, for a certain braking force f a certain deceleration is wanted, say $G = C.f$. Knowing the values $K_{pos}$ and C, and measuring or knowing the masses of the truck and the trailer, the trailer brakes can be controlled or adjusted for example according to:

$$A = g(p)/f = (K_{tt} + M_{ta}.G)/f = K_{pos}/f + M_{ta}.C$$

The truck brakes can be controlled or adjusted for example according to:

$$R = (K_{lt} + K_{la} - K_{fa})/f = (M_{ta} + M_{la}).C - A$$

Measuring also f, for instance measuring the pressure, the control unit 4 of figure 16 can always control the braking according to the last two formulas for A and R. If we want to use only one A and R value for a load, the brakes have to be adjusted, for example, according to:

$$K_{tt} = (A - M_{ta}.C).f > O$$

Which means that:

$$A > M_{ta}.C$$

The value of R can be calculated again according to the equation for R. It is an advantage to take care that the value of R is positive. A negative R value means that the truck brakes do not work, but instead the engine is driving the truck.

Also, if desired, other effects could be taken into account, such as for example an estimation of the air-friction. Furthermore, the braking system is working like conventional systems. Thus also anti-blocking systems can be incorporated.

Of course it is now impossible to detect the event of coming on the verge of the road. The fourth alternative is only useful for the normal braking procedure.

## Claims

1. A method of regulating the force between the drawing unit of a vehicle and one or more units drawn by the drawing unit, each of the drawn units comprising one or more brakable wheel pairs, and the units being interconnected thrugh a pivotable connection, the force acting between two units of the vehicle being determined, **characterized** in that the wheels forming part of a brakable wheel pair are individually braked in dependence on the detected force.

2. A vehicle having a drawing unit (1) and one or more drawn units (2) drawn by the drawing unit (1), each unit (1, 2) comprising one or more brakable wheel pairs and being interconected through respective pivotable couplings, the vehicle comprising sensing means for detecting a force related parameter acting between two units (1, 2) and for generating a signal representation in dependence thereof and passing it to a control unit, **characterized** in that the control unit is adapted for controlling the braking of the wheels of a brakable wheel pair individually in dependence on the generated signal representation.

3. A vehicle according to claim 2, **characterized** in that the sensing means are adapted for sensing a force acting between two units in the longitudinal direction of the vehicle.

4. A vehicle according to claim 3, **characterized** in that the sensing means comprise a force sensing unit, e.g. of the strain gage-type, positioned in connection with the pivotable coupling, which unit converts a sensed force to an electric signal related thereto.

5. A vehicle according to claim 2, **characterized** in that the control unit (4) is also adapted for controlling the means (9) of the vehicle for generating a traction effect in dependence on the detected force.

6. A vehicle according to claim 2, where the mass of each of at least one of the units (1, 2) forming part of the vehicle is known, **characterized** in that the sensing means comprises one of the accelerometers positioned on one of the units (1, 2) which gives off an electric signal related to the actual acceleration of the unit and that the control unit is adapted for calculating the force acting between the individual units as a function of the acceleration and mass of at least one of the units.

7. A vehicle according to claims 2-6, **characterized** in that the control unit is adapted for comparing the size of the force between two units to an upper and a lower predetermined limit value, and reacting if the size of the force falls outside the interval defined between the limit values.

8. A vehicle according to claim 7 comprising means for sensing on a running basis the speed of the vehicle, **characterized** in that the speed sensing means are connected to the control unit for transmission on a running basis of the actual speed values, and that the control unit is adapted for calculating the said limit values in dependence on the mass of the units and the speed of the vehicle.

**9.** A vehicle according to claim 7, **characterized** in that the control unit is adapted for activating the brakes of the units individually depending on whether the size of the force between the units in dependence on the detected force is smaller than the lower limit value.

**10.** A vehicle according to claim 7, **characterized** in that the control unit is adapted for deactivating the traction generating engine of the drawing unit in dependence on whether the force detected is greater than the upper limit value.

**11.** A vehicle according to claims 2-10, **characterized** in that when driving the sensing means on a running basis detect the force acting between the units and continuously or periodically give off an electric signal to the control unit representing this force.

Figure 1a.

Figure 1b.

Figure 2.

Figure 3.

Figure 4.

Figure 5.

Figure 6a.

Figure 6b.

Figure 7.

Figure 8.

Figure 9.

Figure 10a.

Figure 10b.

Figure 11.

Figure 12.

Figure 13.

Figure 14.

Front                                                                                          Back

Switch          Spring          Piston

Figure 15.

Figure 16.

**European Patent Office**

# EUROPEAN SEARCH REPORT

Application Number

EP 91 61 0061

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 060 284 (ADOLF STEINER) | 1-4 | B60T7/20 |
| Y | | 5-7 | B60T13/66 |
| | * the whole document * | | B60T8/24 |
| | --- | | B64F1/22 |
| Y | WO-A-8 903 343 (BRUUN, SVEND) | 5-7 | |
| A | * the whole document * | 8-11 | |
| | --- | | |
| A | GB-A-2 200 957 (RENK AKTIENGESELLSCHAFT) | 5-11 | |
| | * page 4, line 5 - page 6, line 29; figures 1-3 * | | |
| | --- | | |
| A | US-A-4 113 041 (MOGENS BIRKEHOLM) | 1-11 | |
| | * the whole document * | | |
| | --- | | |
| A,D | US-A-4 231 442 (MOGENS BIRKEHOLM) | | |
| | ----- | | |

| | TECHNICAL FIELDS SEARCHED (Int. Cl.5 ) |
|---|---|
| | B60T |
| | B64F |

The present search report has been drawn up for all claims

| Place of search | Date of completion of the search | Examiner |
|---|---|---|
| THE HAGUE | 10 APRIL 1992 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)